(19) Europäisches Patentamt
European Patent Office
Office européen des brevets

(11) **EP 2 392 929 B1**

(12) **EUROPEAN PATENT SPECIFICATION**

(45) Date of publication and mention
of the grant of the patent:
**14.10.2020 Bulletin 2020/42**

(51) Int Cl.:
***G01N 35/04*** *(2006.01)*        ***G01N 35/02*** *(2006.01)*

(21) Application number: **09839135.2**

(86) International application number:
**PCT/JP2009/006828**

(22) Date of filing: **14.12.2009**

(87) International publication number:
**WO 2010/086943 (05.08.2010 Gazette 2010/31)**

(54) **ANALYZER, AND CONTROL METHOD FOR ROTATION OF DISC**

ANALYSATOR UND STEUERVERFAHREN FÜR PLATTENROTATION

ANALYSEUR ET PROCÉDÉ DE COMMANDE POUR LA ROTATION D'UN DISQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.01.2009 JP 2009018961**

(43) Date of publication of application:
**07.12.2011 Bulletin 2011/49**

(73) Proprietor: **Hitachi High-Tech Corporation
Minato-ku
Tokyo 105-6409 (JP)**

(72) Inventors:
• **MAEDA, Kohshi**
**Hitachinaka-shi
Ibaraki 312-8504 (JP)**
• **HOSOIRI, Takehiko**
**Hitachinaka-shi
Ibaraki 312-8504 (JP)**

• **SANO, Minoru**
**Hitachinaka-shi
Ibaraki 312-8504 (JP)**
• **ISHIZAWA, Masato**
**Hitachinaka-shi
Ibaraki 312-8504 (JP)**

(74) Representative: **Strehl Schübel-Hopf & Partner
Maximilianstrasse 54
80538 München (DE)**

(56) References cited:
**EP-A2- 1 380 841          JP-A- 62 294 971
JP-A- 63 098 544          JP-A- 2004 243 291
JP-A- 2004 333 259          US-A- 5 580 524
US-A1- 2004 009 099          US-A1- 2006 204 997
US-A1- 2008 056 942**

EP 2 392 929 B1

**Description**

Technical Field

The present invention relates to an analyzer including a disc that can hold a plurality of samples.

Background Art

An analyzer including a disc that can hold a plurality of samples is known as an automatic analyzer for blood, urine, or the like. Such an analyzer generally includes a detector, a sample introduction mechanism, a reagent addition mechanism, a cleaning mechanism, or the like around the disc. Samples are continuously introduced into the disc from a particular position, and the detector is operated with rotation of the disc to detect sample signals with time.
As a driving method of a disc, the disc is generally rotated once or more in one direction within a predetermined time required for detecting sample signals with time. This allows the sample signals to be detected with time and allows samples to be continuously introduced even if a sample introduction position is fixed in a particular position.
As an example, for an analyzer that detects samples every 18 seconds using a disc on which 160 reaction cells are placed, the disc is rotated for 41 reaction cells every 4.5 seconds, and rotated for 165 reaction cells (reaction cells of the number for one rotation + five reaction cells) in 18 seconds. Thus, the reaction cells placed in a sample introduction position are changed for each measurement in order of No. 1, No. 42, No. 83, No. 124, No. 5, No. 46, No. 87, No. 128, ... No. 199, No. 160 to achieve sample signal detection with time and continuous sample introduction.
US 5 580 524 A is another example of an automated analyzer having a sample wheel with many sample positions around the circumference and where samples can be introduced or removed by a dedicated mechanism.
JP Patent Publication (Kokai) No. 2003-21645A (Patent Literature 1) discloses an automatic analyzer that changes a rotational direction and an amount of movement of a disc.

Citation List

Patent Literature

Patent Literature 1: JP Patent Publication (Kokai) No. 2003-21645A

Summary of Invention

Technical Problem

The inventors of the application have diligently studied nucleic acid analysis using a disc that can hold a plurality of samples, and obtained the following findings.
Before a sample containing nucleic acid is introduced into a disc, the sample needs to be subjected to pretreatment such as reaction solution adjustment, and a time required for the pretreatment may differ depending on analysis items requested. For example, a DNA amplification test and an RNA amplification test require different pretreatments. When a PCR method is used as a nucleic acid analysis method, DNA can be directly amplified, while for RNA, a process for synthesizing DNA from template RNA using reverse transcriptase is required, and pretreatment times are significantly different. When a Nucleic Acid Sequence based Amplification method (hereinafter referred to as an NASBA method) for detecting RNA as a template is used as a nucleic acid analysis method, RNA can be directly detected, while for DNA, a process for restriction enzyme treatment of template DNA is required, and pretreatment times are also significantly different. Also in a nucleic acid test including a nucleic acid extraction process, a pretreatment method differs depending on patient's specimens (blood, serum, plasma, sputum, urine, stool, or the like) or types of template nucleic acid to be extracted. Specifically, when the pretreatment method differs as described above, it is very difficult to continuously treat samples in the same time.
Thus, for an automatic analyzer that continuously analyzes samples using a disc, when assays with different pretreatment times are requested at random, samples cannot be introduced into the disc at constant timing. If the disc is controlled by a conventional driving method, samples are discretely introduced into the disc to reduce the maximum number of samples placed on the disc and reduce test throughput.
For analysis methods with the same pretreatment time, samples with different measurement times may be requested at random. For example, amplification efficiency of a gene region to be amplified differs depending on test items, and thus a time to reach a maximum value of amplification differs. More specifically, by the NASBA method, real time measurement is performed at a measurement interval of 30 seconds until amplification of nucleic acid reaches a maximum value. Measurement times are significantly different such that the measurement time for an HIV virus test (NucliSENS HIV-1 kit, bioMérieux SA) is 60 minutes and the measurement time for an Enterovirus test (NucliSENS Enterovirus kit, bioMérieux SA) is 180 minutes. Also in biochemical automatic analysis, a reaction time course differs depending on test items and thus a measurement time differs. Thus, for automatic analysis in which samples with a short measurement time and samples with a long measurement time are introduced into a disc at random, timing of completion of measurement differs for each sample. Therefore, in a conventional disc driving method, even if measurement is completed, a measured sample cannot be discarded until the measured sample stops at a sample discard position. Also, even if there is a different sample position into which a sample can be introduced, a next sample cannot be introduced until the discarded sample position reaches a sample introduction position.

Further, in an automatic analyzer using a disc, if analyses with different pretreatment times and analyses with different measurement times are requested at random, throughput is extremely reduced.

The present invention has an object to provide an automatic analyser as defined in independent claim 1 and a corresponding control method as defined in independent claim 12.

Solution to Problem

The present invention relates to performing adjustment rotation, rotation returning to origin, and measurement rotation in specimen analysis using a disc having a plurality of sample positions on a circumference. The adjustment rotation is an operation for placing a desired sample position in a particular position for introducing a sample into the disc or discarding the sample. The rotation returning to origin is an operation for placing an origin of the disc in a particular position. The measurement rotation is an operation for rotating the disc at a predetermined speed for measuring a plurality of samples held by the disc.

Advantageous Effects of Invention

According to the present invention, even if samples with different pretreatment times are requested at random, the samples can be introduced into the disc without space to increase throughput of random requests for analyses with different pretreatment times. Even if analyses with different measurement times are requested at random, samples can be quickly discarded after measurement of the samples is completed, allowing introduction of new samples and increasing throughput.

Brief Description of Drawings

[Figure 1] Figure 1 is a schematic view illustrating a basic configuration of an automatic analyzer according to an embodiment.

[Figure 2] Figure 2 is a schematic view illustrating a reaction container conveying mechanism or the like in the embodiment.

[Figure 3] Figure 3 is a schematic view showing a relation between the automatic analyzer and peripheral devices in the embodiment.

[Figure 4] Figure 4 is a schematic view of a disc and peripheral mechanisms in the embodiment.

[Figure 5] Figure 5 is an operation flowchart of the disc, a detector, and a sample introduction/discard mechanism in the embodiment.

[Figure 6] Figure 6 is an operation flowchart from measurement start operation to measurement rotation in the embodiment.

[Figure 7] Figure 7 is an operation flowchart of a shield unit, a disc, a detector, and a sample introduction/discard mechanism in the embodiment.

Description of Embodiments

The inventors of the application have made various studies for a disc driving method that can continuously introduce or discard samples while maintaining maximum throughput in an automatic analyzer that is requested to perform analyses with different pretreatment times or different measurement times, and reached an analyzer and a method disclosed in an embodiment.

In the embodiment, a sample position on a disc into which a sample can be introduced is moved to an introduction position accessible to a mechanism that can introduce and discard a sample by adjustment rotation, and the sample is introduced by a sample introduction mechanism. Then, in order to maintain a fixed measurement interval for all samples introduced into the disc, the disc is moved to an origin as a starting point of measurement rotation by rotation returning to origin. Finally, the disc is rotated from the origin at a fixed speed to measure all the samples introduced. The adjustment rotation, rotation returning to origin, and measurement rotation are performed at a predetermined measurement interval determined by an analysis method.

In the embodiment, rotational speeds of the adjustment rotation and the rotation returning to origin are faster than a rotational speed of the measurement rotation. The adjustment rotation and the rotation returning to origin can be performed both to right and left so that the disc can be moved to a target position in a minimum travel distance. This ensures a long time required for introducing or discarding samples.

In an embodiment, an automatic analyzer is disclosed including: a disc having a plurality of sample positions that can hold samples on a circumference; a sample introduction device that introduces a sample into the disc; a detector that is placed around the disc and measures the sample placed on the disc; and a rotation control device that controls rotation of the disc, wherein the disc is rotated so as to move a sample position to an introduction position accessible to a sample introduction mechanism, then a sample is introduced into the sample position placed in the introduction position by the sample introduction mechanism, the disc is rotated so as to move an origin of the disc to a particular position, and then a plurality of samples on the disc are measured by the detector while the disc is rotated at a predetermined speed.

In an embodiment, an automatic analyzer is disclosed including: a disc having a plurality of sample positions that can hold samples on a circumference; a sample introduction device that introduces a sample into the disc and discards a sample from the disc; a detector that is placed around the disc and measures the sample placed on the disc; and a rotation control device that controls rotation of the disc, wherein the disc is rotated so as to move a sample position that holds a measured sample to an introduction/discard position accessible to a sample introduction/discard mechanism, then the sample is discarded from the sample position placed in the introduction/discard position by the sample introduction/discard mechanism, a sample is introduced into the sample position, the disc is rotated so as to move an origin of the disc to a particular position, and then the plurality of samples on the disc are measured by the detector while the disc is rotated at a predetermined speed.

In an embodiment, an automatic analyzer is disclosed including: a disc having a plurality of sample positions that can hold samples on a circumference; a sample introduction/discard device that introduces a sample into the disc and discards a sample from the disc; a detector that is placed around the disc and measures the sample placed on the disc; and a rotation control device that controls rotation of the disc, wherein the disc is rotated so as to move a sample position that holds a measured sample to a discard position accessible to a sample discard mechanism, then the sample is discarded from the sample position placed in the discard position by the sample discard mechanism, the disc is rotated so as to move the sample position to an introduction position accessible to a sample introduction mechanism, then a sample is introduced into the sample position placed in the introduction position by the sample introduction mechanism, the disc is rotated so as to move an origin of the disc to a particular position, and then a plurality of samples on the disc are measured by the detector while the disc is rotated at a predetermined speed.

In an embodiment, an automatic analyzer is disclosed including: a disc having a plurality of sample positions that can hold samples on a circumference; a sample discard device that can discard a sample from the disc; a detector that is placed around the disc and measures the sample placed on the disc; and a rotation control device that controls rotation of the disc, wherein the disc is rotated so as to move an origin of the disc to a particular position, then a plurality of samples on the disc are measured by the detector while the disc is rotated at a predetermined speed, the disc is rotated so as to move a sample position that holds a measured sample to a discard position accessible to a sample discard mechanism, and then the sample is discarded from the sample position placed in the discard position by the sample discard mechanism.

An embodiment discloses a control method for rotation of a disc, wherein in an analyzer including a disc having a plurality of sample positions that can hold samples on a circumference, a rotation control device that controls rotation of the disc rotates the disc so as to move a sample position to an introduction position accessible to a sample introduction mechanism, the sample introduction mechanism introduces a sample into the sample position placed in the introduction position, then the rotation control device rotates the disc so as to move an origin of the disc to a particular position, then the rotation control device rotates the disc at a predetermined speed, and a detector measures a plurality of samples on the disc.

An embodiment discloses a control method for rotation of a disc, wherein in an analyzer including a disc having a plurality of sample positions that can hold samples on a circumference, a rotation control device that controls rotation of the disc rotates the disc so as to move a sample position that holds a measured sample to an introduction/discard position accessible to a sample introduction/discard mechanism, the sample introduction/discard mechanism discards the sample from the sample position placed in the introduction/discard position and introduces a sample into the sample position, then the rotation control device rotates the disc so as to move an origin of the disc to a particular position, and then the rotation control device rotates the disc at a predetermined speed, and a detector measures a plurality of samples on the disc.

An embodiment discloses a control method for rotation of a disc, wherein in an analyzer including a disc having a plurality of sample positions that can hold samples on a circumference, a rotation control device that controls rotation of the disc rotates the disc so as to move a sample position that holds a measured sample to a discard position accessible to a sample discard mechanism, the sample discard mechanism discards the sample from the sample position placed in the discard position, then the rotation control device rotates the disc so as to move the sample position to an introduction position accessible to a sample introduction mechanism, the sample introduction mechanism introduces a sample into the sample position placed in the introduction position, then the rotation control device rotates the disc so as to move an origin of the disc to a particular position, then the rotation control device rotates the disc at a predetermined speed, and a detector measures a plurality of samples on the disc.

An embodiment discloses a control method for rotation of a disc, wherein in an analyzer including a disc having a plurality of sample positions that can hold samples on a circumference, a rotation control device that controls rotation of the disc rotates the disc so as to move an origin of the disc to a particular position, then a detector measures a plurality of samples on the disc while the disc is rotated at a predetermined speed, the rotation control device rotates the disc so as to move a sample position that holds a measured sample to a discard position accessible to a sample discard mechanism, and the sample discard mechanism discards the sample from the sample position placed in the discard position.

The embodiment discloses that a rotational speed and/or a rotational direction of the disc are variable.

The embodiment discloses that the rotational direction is controlled so as to minimize a travel time when the origin of the disc is moved to a particular position.

The embodiment discloses that when a particular sample position of the disc is moved to the introduction position, the rotational direction is controlled to minimize the travel time.

The embodiment discloses that when the particular sample position of the disc is moved to the discard position, the rotational direction is controlled to minimize the travel time.

The embodiment discloses that the sample held by the disc is a pretreated specimen.

The embodiment discloses that the sample held by the disc is a reaction solution that can amplify target nucleic acid at a desired temperature.

The embodiment discloses that the sample introduction mechanism or the sample introduction/discard mechanism includes a reaction container conveying mechanism that conveys a reaction container holding a sample to the disc.

The embodiment discloses that the sample discard mechanism or the sample introduction/discard mechanism includes a reaction container conveying mechanism that conveys a reaction container holding a sample from the disc.

Now, the foregoing and other novel features and advantages will be described with reference to the drawings. The drawings are used for understanding the invention, and do not limit the scope of right. The embodiments may be combined.

[Embodiments]

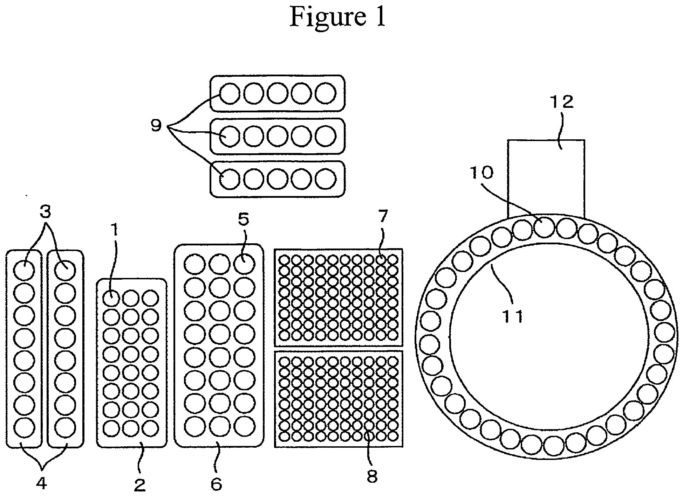

Figure 1 shows a basic configuration of an automatic analyzer according to an embodiment. The analyzer includes a specimen container rack 2 in which a specimen container 1 containing a specimen to be tested can be set, a reagent rack 4 housing a plurality of reagent containers 3 containing reagents that react with various ingredients of the specimen, a reaction container rack 6 housing a reaction container 5 in which the specimen is mixed with the reagent, a dispensing chip rack 8 housing a dispensing chip 7, a plurality of incubators 9 set to two or more different temperatures, a disc 11 on which a plurality of reaction container carriers 10 are placed on a circumference, and a detector 12 that detects a reaction.

The reaction container 5 in this embodiment may be any container that has little influence on detection performance, and preferably a 0.2 ml single tube (Greiner Bio-One Co. Ltd., Germany).

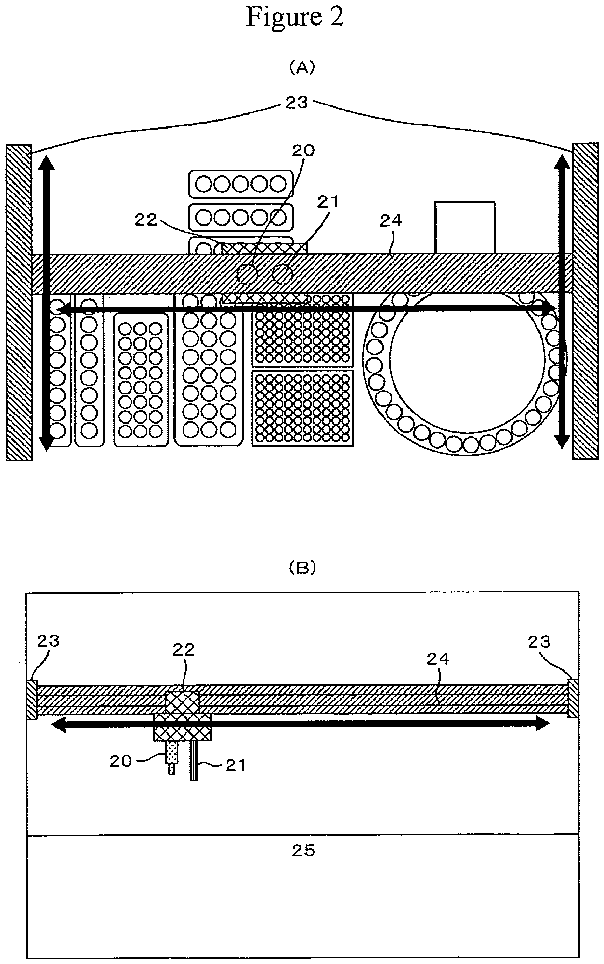

Figure 2 is a schematic view illustrating a dispensing probe 20 for dispensing a specimen or a reagent between racks, a reaction container conveying mechanism 21 for conveying a reaction container, a head 22 that connects the dispensing probe 20 and the reaction container conveying mechanism 21, and a side rail 23 and a center rail 24 for moving the head in X-axis and Y-axis directions.

Now, a basic operation of the analyzer for automatic analysis of a specimen will be described. The dispensing probe 20 is moved to a position of the dispensing chip rack 8 by operations of the side rail 23 and the center rail 24, and the dispensing chip 7 is mounted to the dispensing probe 20. The dispensing probe 20 to which the dispensing chip 7 is mounted takes out a specimen from the specimen container 1, and ejects the specimen into the reaction container 5. Then, the dispensing chip 7 is changed, a reagent is taken out from the reagent container 3 and ejected to the reaction container 5, and the dispensing probe 20 repeats suction and ejection to mix a reaction solution. The reaction container 5 containing the reaction solution is conveyed to one of the incubators 9 by the reaction container conveying mechanism 21 to change a temperature of the reaction solution. After the reaction container 5 is held for a predetermined time in the incubator, the reaction container 5 is conveyed to another incubator 9 by the reaction container conveying mechanism to change the temperature of the reaction solution, and is similarly held for a predetermined time in the incubator. The conveyance between the incubators is performed under a condition determined by an analysis method. According to the determined analysis method, after or during a temperature change between the incubators, the dispensing probe 20 to which the dispensing chip 7 is mounted may take out a reagent from the reagent container 3 and eject the reagent to the reaction container 5. After the temperature change, the reaction container conveying mechanism 21 conveys the reaction container 5 containing a pretreated specimen to a standby region near a sample introduction/discard mechanism. The pretreated specimen includes a specimen to be tested and. a reaction solution in which a reagent required for a reaction is mixed. For example, for nucleic acid analysis, the pretreated specimen is a reaction solution that can amplify target nucleic acid as a specimen to be tested at a desired temperature.

The sample introduction/discard mechanism places the reaction container 5 in the standby region in the predetermined reaction container carrier 10 placed on the disc 11. Also, as required, the reaction container 5 placed on the predetermined reaction container carrier 10 is discarded. The reaction container carrier 10 is maintained at a temperature at which the reaction is most effectively developed, by a temperature control mechanism of the disc. The reaction is detected by the detector 12. In order to prevent degradation of samples by light or entry of ambient light in detection, the disc 11 and the detector 12 are entirely shielded from ambient light.

In this embodiment, as a conveying mechanism that conveys a reaction container, a conveying mechanism that conveys both the dispensing probe and the reaction container is disclosed, but the dispensing probe and the reaction container may be handled by different conveying mechanisms. In this embodiment, only one conveying mechanism is provided, but a plurality of conveying mechanisms may be placed correspondingly to a plurality of constant temperature mechanisms or analysis mechanisms. In this embodiment, the conveying mechanism and the sample introduction/discard mechanism are separate, but may be integrated so that the conveying mechanism directly conveys the reaction container 5 to the reaction carrier 10 on the disc 11.

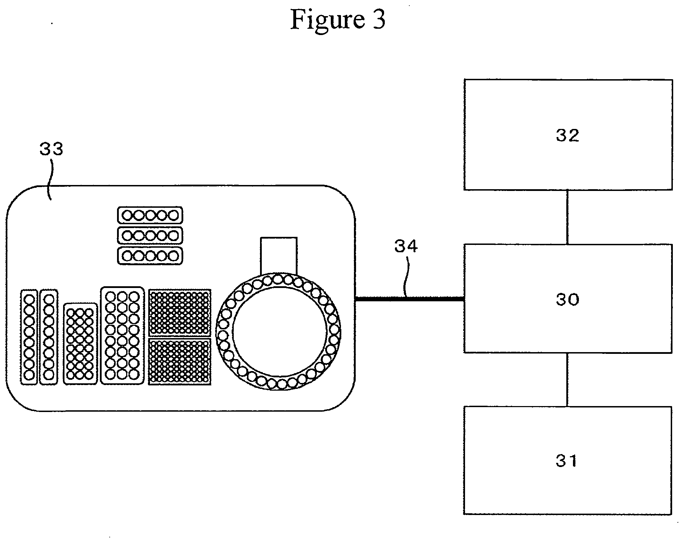

Figure 3 shows a relation between the automatic analyzer and peripheral devices. To the analyzer, a storage device 30 that stores detection data, a calculator 31 that calculates the stored detection data, and a monitor 32 that outputs a calculation result. The peripheral devices may be connected to the automatic analyzer by a communication cable 34 and independently function, or may be included in the automatic analyzer. The detection data detected by the detector 12 is transmitted to the storage device 30 and calculated by the calculator 31, and the detection result is output to the monitor 32.

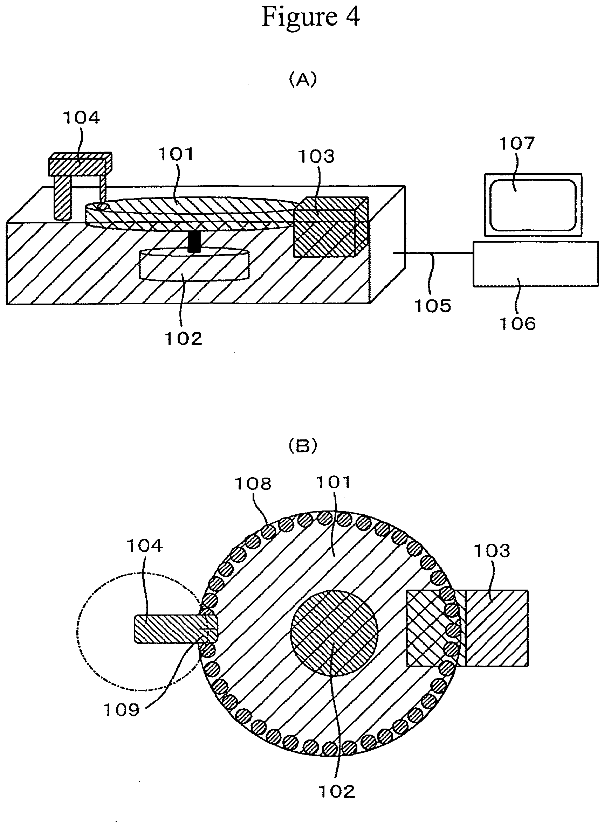

Figure 4 schematically shows peripheral mechanisms of the disc. The analyzer includes a disc 101, a drive unit 102 that rotates the disc 101, a detector 103 for analyzing a pretreated specimen in the reaction container, a mechanism that introduces a sample into the disc, and a sample introduction/discard mechanism 104 that conveys the reaction container to a predetermined reaction container carrier 10 on the disc 11, and discards a reaction container held by the predetermined reaction container carrier 10. The mechanism is controlled by a control PC 106 including the storage device 30 and the calculator 31 via a communication cable 105.

The disc in this embodiment is a rotating disc as shown in Figure 4(B), and includes a plurality of reaction carriers at an edge where the reaction containers can be held. A position of each reaction carrier on the disc can be regarded as a sample position. A plurality of sample containers may be provided at the edge of the disc, and a pretreated specimen may be directly dispensed to the sample container. In this case, a position with the sample container can be regarded as a sample position. In the disc 101, an origin (on a disc side) as a starting point of measurement rotation is virtually provided. The origin may be physically provided by marking a spot or the like on the disc 101.

The sample introduction/discard mechanism in this embodiment introduces a reaction container 5 holding a pretreated specimen into a particular reaction carrier on the disc, and lifts and discards a reaction container 5 held by a particular reaction carrier. In other words, the sample introduction/discard mechanism is a reaction container conveying mechanism, and conveys a reaction container to a reaction carrier placed on a sample introduction/discard position 109 set in a particular position on an analyzer body, and conveys a reaction container from a reaction carrier.

The sample introduction/discard mechanism is not limited to a mechanism that conveys a reaction container. For example, when a reaction container is directly provided on the disc, the sample introduction/discard mechanism may directly dispense a pretreated specimen to the reaction container and suck an unnecessary specimen from the container. In this case, a cleaning mechanism of the reaction container is desirably provided in the sample introduction/discard mechanism. Specifically, "sample introduction" herein refers to placement of a reaction container using the reaction container conveying mechanism, and also refers to addition of a specimen to the disc by sample dispensing in some cases. Also, "sample discard" herein refers to removal of a reaction container from the disc using the reaction container conveying mechanism, and also refers to suction of a specimen from the disc, or cleaning of the disc after suction in some cases.

The sample introduction mechanism and the sample discard mechanism may be separately provided. This may increase throughput. In this case, it may be allowed that the sample introduction/discard position is divided, a position where the sample introduction mechanism conveys a reaction container to a reaction carrier is a sample introduction position, and a position where the sample discard mechanism conveys a reaction container from a reaction carrier is a sample discard position. Further, even when an integral sample introduction/discard mechanism is used, the sample introduction position and the sample discard position may be separate.

The drive unit 102 in this embodiment controls a rotational angle of the disc 101, and rotates the disc 101 at a fixed speed. For a rotational direction, a clockwise direction and a counterclockwise direction may be selected as required, but is basically the clockwise direction. Depending on the intended use, the rotational direction may be limited to one direction. The rotational speed is variable depending on the intended use, but may be substantially constant depending on the intended use.

The drive unit 102 stops the disc 101 in desired states as required. One of the desired states is an origin state, and the other is a sample introduction/discard state.

The origin state is a state where a rotational angle of the disc 101 is in an initial state. In other words, the origin (on the disc side) of the disc 101 is a particular position with respect to the analyzer body. The origin state is used in "rotation returning to origin" described later or the like.

The sample introduction/discard state is a state where a desired reaction carrier is located in the sample introduction/discard position. In other words, a desired sample position is located in the sample introduction/discard position. The sample introduction/discard state is used in "sample introduction", "sample discard", or the like described later. When the sample introduction position and the sample discard position are separate, the state is separated into a sample introduction state and a sample discard state.

A detector 103 in this embodiment analyzes a sample in a reaction container held by the reaction carrier on the disc 101, and is provided in an upper, lower, or side portion of the disc 101. Any detector may be used that can analyze a sample to be measured. For example, when a sample labeled with fluorescent dye is analyzed, a detector is provided that detects an excitation light source and fluorescent emission. When an absorbance change is to be measured, a light source lamp and a photometer are provided.

The sample in this embodiment refers to an object to be measured detected by the detector, and may be any object to be measured that can be directly or indirectly detected by the detector. Specifically, when the object to be measured is a biological specimen, and a specimen ingredient is analyzed by an enzyme reaction, the sample includes a biological specimen ingredient and a reaction solution of a mixture of an enzyme liquid and a substrate liquid required for an enzyme reaction. More specifically, when nucleic acid as a biological specimen ingredient is amplified and detected, the sample includes nucleic acid extracted from the biological specimen ingredient by a pretreatment process and an amplification reaction solution such as primer or enzyme for amplifying the nucleic acid. There are a plurality of amplification methods of nucleic acid such as a PCR method, a LAMP method, a TRC method, a NASBA method, or a TMA method, but in the present invention, any method may be used that allows detection using the detector 103, not limited to a detailed measurement example described below.

The control PC 106 can control the drive unit 102 (disc 101), the detector 103, and the sample introduction/discard mechanism. The control PC 106 preferably includes a measurement data storage function, a calculation function, and a measurement result display function. The control PC 106 preferably includes a communication function, and conveys a calculation result to a different device, for example, a device having a printing function or a device that manages test data.

A driving method of the disc will be described. Rotation patterns of the disc in the analyzer can be broadly classified into measurement rotation, adjustment rotation, and rotation returning to origin.

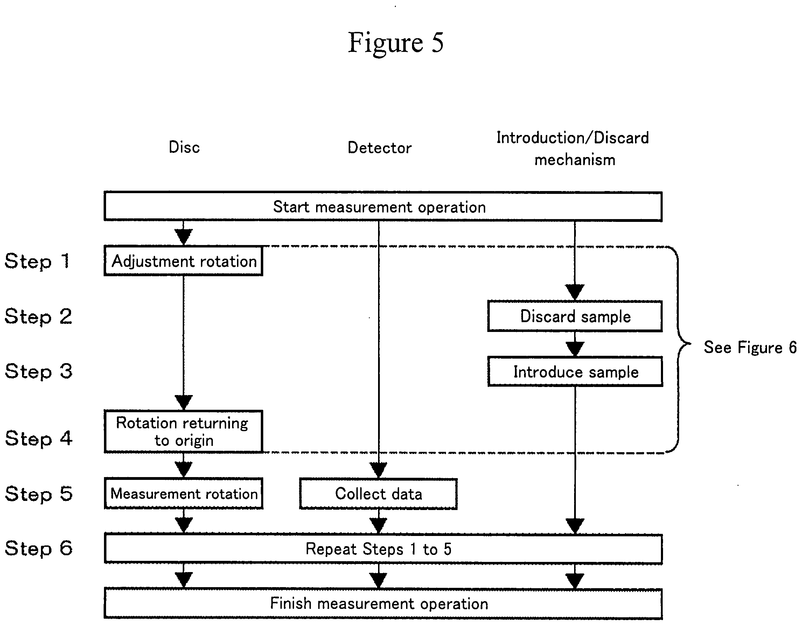

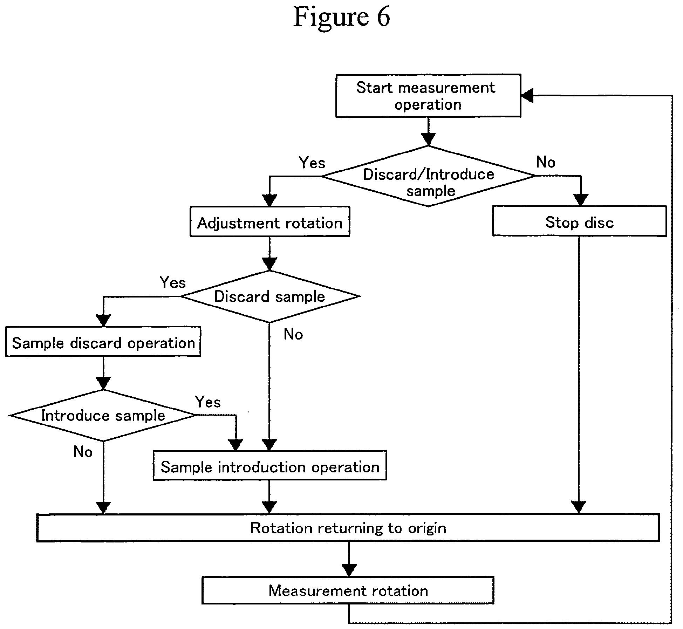

Figure 5 shows a summary of an operation flow of the disc, the detector, and the sample introduction/discard mechanism. Figure 6 shows a detailed operation flow from measurement start operation to measurement rotation.

In the analyzer, adjustment rotation is performed as driving operation of the disc after measurement operation is started. If there is a specimen to be discarded or a pretreated specimen to be introduced when the measurement operation is started, the specimen is discarded or introduced, and the rotation returning to origin is performed. If there is no specimen to be discarded or pretreated specimen to be introduced when the measurement operation is started, the disc is stopped for a time assigned to adjustment rotation or sample introduction/discard. Then, measurement rotation is performed to measure a sample, and data of a pretreated specimen is collected. This operation is repeated to analyze many samples.

In Figure 5, Steps 1 to 5 are included in one measurement cycle. Measurement in the measurement cycle is repeatedly performed. The number of repetitions depends on measurement time.

The "adjustment rotation" in this embodiment refers to rotation for moving a sample position where a sample can be introduced to a sample introduction position. The sample position where a sample can be introduced refers to a sample position where there is no specimen or a sample position where an introduced specimen has been measured. When there is the measured specimen, the sample introduction/discard mechanism discards the measured sample in the disc, and then introduces a new pretreated specimen.

The adjustment rotation is performed, and thus new pretreated specimens can be introduced into any sample positions on the disc without space if analysis of a pretreated specimen is requested at any timing. In whatever order pretreated specimens with different measurement times are introduced into the disc, a pretreated specimen measured earliest can be successively discarded.

The drive unit selects a rotational direction and a rotational speed of the disc so that a desired sample position of the disc can be rotated to the sample introduction/discard position in a minimum distance. The rotational speed variable function and minimization of the rotational distance allow quick adjustment rotation and ensure a longer time for sample introduction and/or sample discard.

The "rotation returning to origin" in this embodiment is an operation for returning the position of the disc to the origin after measurement rotation or adjustment rotation in order to start rotation from the origin in next measurement rotation. By the rotation returning to origin, if the disc is stopped in any position by measurement rotation or adjustment rotation, the disc is returned to the origin before measurement rotation, and thus a pretreated specimen in any position in the disc can be reliably measured at a certain interval.

The drive unit selects the rotational direction and the rotational speed of the disc so that the disc quickly enters an origin state. The rotational speed variable function and minimization of the rotational distance allow quick rotation returning to origin and ensure a longer time for sample introduction and/or sample discard. When the disc after the adjustment rotation and the measurement rotation enters the origin state, the rotation returning to origin is not performed, and the disc is stopped during a time assigned to the rotation returning to origin.

The "measurement rotation" in this embodiment is rotation for measuring a pretreated specimen introduced into the sample position, and an operation for starting rotation with the origin as a starting point, and stopping the rotation after all pretreated specimens introduced are measured. The measurement rotation is always started from the origin state, the disc is rotated at the same speed, and the pretreated specimen is measured at the same timing, and thus a pretreated specimen in any sample position in the disc can be reliably measured at a regular interval.

A time cycle for performing the adjustment rotation, the sample introduction and/or discard, the rotation returning to origin, and the measurement rotation is determined from a measurement interval required by an analysis method. The measurement interval in this embodiment is a time between detection points when the pretreated specimen is detected in real time. More specifically, a measurement interval of the NASBA method is 30 seconds, and a measurement interval of biochemical analysis is 18 seconds. Of course, any measurement interval may be set as long as the analysis method accepts. When the measurement interval is X, a time for adjustment rotation is A, a time for sample introduction and/or discard is B, a time for rotation returning to origin is C, and a time of measurement rotation is D, a relationship between the operation times is expressed by Expression 1.

$$A+B+C+D=X \qquad \ldots (1)$$

Specifically, if the rotational speed and the rotational direction are controlled in the adjustment rotation or the rotation returning to origin, and the time A of the adjustment rotation or the time C of the rotation returning to origin is shortened, a longer time B required for introducing or discarding a sample can be ensured.

As described above, according to this embodiment, even if protocols with different pretreatment times are applied to a specimen at random, the reaction containers can be placed on the disc without space. Even if test items with different measurement times are requested at random, a measured sample can be quickly discarded. Further, the adjustment rotation and the rotation returning to origin can be performed in a short time, thereby increasing a time assigned to discarding or placing the reaction container.

As a more detailed example, a disc driving method when the analyzer is used for nucleic acid analysis by a NASBA method will be described below.

1. Measurement condition

Table 1 shows a measurement condition of the NASBA method as one of nucleic acid analysis methods, Table 2 shows reagents and specimens used, and Table 3 shows a specimen adjustment method.

[Table 1]

Table 1

| Measurement condition of NASBA method | |
| --- | --- |
| Item | Contents |
| Test protocol | DNA protocol, RNA protocol |
| Detection reagent | fluorescent dye (FAM, ROX) |

(continued)

| Measurement condition of NASBA method | |
|---|---|
| Item | Contents |
| Measurement interval (second) | 30 |
| Measurement time (minute) | 30, 60, 90, 120, 150, 180 |

[Table 2]

Table 2

| Reagents and speciments of NASBA method | |
|---|---|
| Item | Contents |
| Reagent used | NucliSENS HIV-1 kit(RNA), NucliSENS HSV-1 kit (DNA) |
| Specimens to be tested | HIV-1 kit: positive control RNA nucleic acid, internal standard RNA nucleic acid, HSV-1 kit: positive control DNA nucleic acid, internal standard DNA nucleic acid |

[Table 3]

Table 3

| Sample preparation method using reagents in Table 2 | | | |
|---|---|---|---|
| Process | HIV-1 kit | HSV-1 kit | Device used |
| Reagent preparation | 90 ul of diluted solution is added to a lyophilized reagent and stirred and dissolved by a dispensing chip. | 90 ul of diluted solution is added to a lyophilized reagent and stirred and dissolved by a dispensing chip. After dissolved, 85 ul of the solution is sucked and added to lyophilized control enzyme and stirred and dissolved. | |
| Enzyme prepartion | 45 ul of diluted solution is added to lyophilized enzyme and stirred and dissolved by a dispensing chip. | | |
| Reaction solution preparation | 10 ul of reagent is dispensed into a reaction container, then 5 ul of specimen is added, and they are stirred by a dispansing chip. | | 0.2 ml minute tube |
| Control enzyme treatment | No | 37°C 15 minutes | EasyQ Incubator |
| Heating denaturation treatment | 65°C 2 minutes => 41°C | 95°C 5 minutes => 41°C | |
| Enzyme addition | After 41°C is reached, 5 ul of enzyme is added and stirred with a cap being closed. | | |

2. Configuration of analyzer

Table 4 shows details of a configuration of the analyzer when nucleic acid analysis is performed by a NASBA method.

[Table 4]

Table 4

| Configuration of analyzer when NASBA method is performed | |
|---|---|
| Item | Contents |
| Disc | A disc configured so that a minute reaction container of 0.2 ml can be placed thereon, and a bottom and a side surface of the reaction container are open |
| Disc drive mechanism | A mechanism that can drive the disc by rotation at a constant speed, rotation in opposite directions, and rotation at variable speed |
| Disc heating mechanism | Control to NASBA reaction temperature (41°C) |
| Dectector | Detector that applies an excitation light to a bottom of the reaction container, excites fluorecent dye, and detects from a side surface using a filter optimum for each fluorecent wavelength. There are two types of detectors for FAM and ROX, which are arranged on a side surface of the disc. |
| Sample introduction/ discard mechanism | The mechanism has a function of holding, lifting and lowering the reaction container. The mechanism can continuously perform introduction and discard. |
| Ambient light shield unit | The unit is configured to entirely cover the disc, the drive mechanism, the detector, and the disc heating mechanism. The unit includes an automatic opening/closing shutter in a sample introduction portion. |
| Control PC | The control PC performs control of the disc drive mechanism, temperature control, shutter control, control of the sample introduction/discard mechanism, obtaining data from the detector, and a date analysis function. |

3. Detection operation

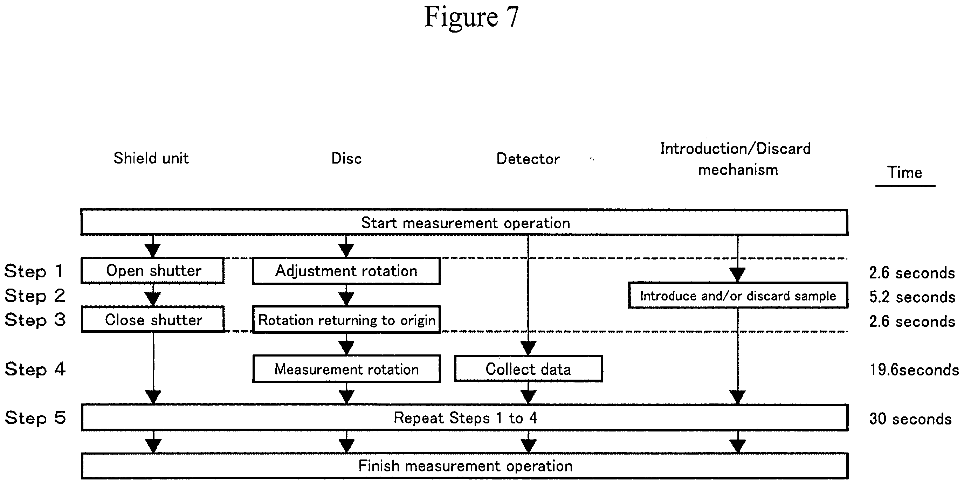

An operation of the analyzer when nucleic acid is analyzed by the NASBA method will be described. Figure 7 shows a detailed operation flow of a shield unit, the disc, the detector, and the sample introduction/discard mechanism. In this example, an automatic opening/closing shutter provided in a sample introduction portion is opened at the time of adjustment rotation, and closed at the time of rotation returning to origin. This can prevent contamination of a specimen. For time assigned to each operation, the adjustment rotation is 2.6 seconds, the sample introduction and/or discard is 5.2 seconds, the rotation returning to origin is 2.3 seconds, and the measurement rotation is 19.6 seconds. Specifically, a pretreated specimen is introduced or discarded and measured in units of 30 seconds.

Industrial Applicability

The present invention can be applied to a nucleic acid analyzer that measures pretreated specimens with different pretreatment times or measurement times at random. Nucleic acid analysis may be applied to a constant temperature amplification method for amplifying nucleic acid at a constant temperature, and also a nucleic acid amplification method for denaturing or annealing by changing a temperature such as a PCR method. Further, besides the nucleic acid analysis, the present invention may be applied to an automatic analyzer of a biological specimen such as blood or urine using an antigen-antibody reaction.

Reference Signs List

1, 3     reagent container
2     specimen container rack
4     reagent rack
5     reaction container
6     reaction container rack

| 7 | dispensing chip |
|---|---|
| 8 | dispensing chip rack |
| 9 | incubator |
| 10 | reaction container carrier |
| 11, 101 | disc |
| 12, 103 | detector |
| 20 | dispensing probe |
| 21 | reaction container conveying mechanism |
| 22 | head |
| 23 | side rail |
| 24 | center rail |
| 25 | analysis table surface |
| 30 | storage device |
| 31 | calculator |
| 32, 107 | monitor |
| 33 | automatic analyzer |
| 34, 105 | communication cable |
| 102 | drive unit |
| 104 | sample introduction/discard mechanism |
| 106 | control PC |
| 108 | sample position |
| 109 | sample introduction/discard position |

**Claims**

1. An automatic analyzer comprising:

   a disc (11, 101) having a plurality of sample positions (108) that can hold samples on a circumference;
   a sample introduction device (20, 21, 104) for introducing a sample into the disc;
   a detector (12, 103) for measuring the sample; and
   a rotation control device (102, 106) for controlling rotation of the disc,
   wherein the rotation control device is adapted to control rotation of the disc so as to move a sample position (108) on the disc to an introduction position (109) accessible to the sample introduction device (20, 21, 104), and a sample is then introduced into the sample position placed in the introduction position by the sample introduction device,
   **characterised in that**
   the detector (12, 103) is placed at a position around the disc for measuring the sample placed on the disc, and the rotation control device (102, 106) is further adapted to control rotation of the disc (11, 101) so as to move an origin of the disc to a particular position thereby returning the disc to an origin state, before then a plurality of samples on the disc are measured by the detector while the disc is rotated at a predetermined speed starting from the origin state.

2. The automatic analyzer according to claim 1, wherein:

   the sample introduction device has a sample introduction/discard mechanism (20, 21, 104) for introducing a sample into the disc and discarding a sample from the disc;
   wherein the disc (11, 101) is rotated so as to move a sample position (108) that holds a measured sample to an introduction/discard position (109) accessible to the sample introduction/discard mechanism (20, 21, 104), then the sample is discarded from the sample position placed in the introduction/discard position by the sample introduction/discard mechanism, and a sample is introduced into the sample position (108).

3. The automatic analyzer according to claim 1, wherein:

   the sample introduction device (20, 21, 104) has a sample introduction mechanism and a sample discard mechanism for introducing a sample into the disc and discarding a sample from the disc;
   wherein the disc (11, 101) is rotated so as to move a sample position (108) that holds a measured sample to a discard position accessible to the sample discard mechanism, then the sample is discarded from the sample position placed in the discard position by the sample discard mechanism, and
the disc is rotated so as to move the sample position (108) to the introduction position accessible to the sample introduction mechanism (20, 21, 104), then a sample is introduced into the sample position placed in the introduction position by the sample introduction mechanism.

4. The automatic analyzer according to any one of claims 1 to 3, wherein a rotational speed and/or a rotational direction of the disc (11, 101) are variable.

5. The automatic analyzer according to any one of claims 1 to 3, wherein the rotational direction is controlled so as to minimize a travel time when the origin of the disc (11, 101) is moved to the particular position.

6. The automatic analyzer according to any one of claims 1 to 3, wherein when a particular sample position (108) of the disc (11, 101) is moved to the introduction position (109), the rotational direction is controlled to minimize the travel time.

7. The automatic analyzer according to any one of claims 2 to 3, wherein when the particular sample position (108) of the disc (11, 101) is moved to the discard position (109), the rotational direction is controlled to minimize the travel time.

8. The automatic analyzer according to any one of claims 1 to 3, wherein the sample is a pretreated specimen.

9. The automatic analyzer according to any one of claims 1 to 3, wherein the sample is a reaction solution that can amplify target nucleic acid at a desired temperature.

10. The automatic analyzer according to any one of claims 1 to 3, wherein the sample introduction device (20, 21, 104) includes a reaction container conveying mechanism (21) that conveys a reaction container holding a sample to the disc (11, 101).

11. The automatic analyzer according to any one of claims 2 to 3, wherein the sample discard mechanism or the sample introduction/discard mechanism (20, 21, 104) includes a reaction container conveying mechanism (21) that conveys a reaction container holding a sample from the disc (11, 101).

12. A control method for rotation of a disc having a plurality of sample positions that can hold samples on a circumference, wherein a rotation control device (102, 106) that controls rotation of the disc rotates the disc (11, 101) so as to move a sample position (108) on the disc to an introduction position (109) accessible to a sample introduction mechanism (20, 21, 104),
the sample introduction mechanism (20, 21, 104) introduces a sample into the sample position placed in the introduction position, then the rotation control device rotates the disc so as to move an origin of the disc to a particular position thereby returning the disc to an origin state, and then
the rotation control device (102, 106) rotates the disc at a predetermined speed starting from the origin state, and a detector (12, 103) measures a plurality of samples on the disc.

13. The control method according to claim 12,
wherein the rotation control device (102, 106) that controls rotation of the disc rotates the disc (11, 101) so as to move the sample position (108) that holds a measured sample to an introduction/discard position (109) accessible to a sample introduction/discard mechanism (20, 21, 104),
the sample introduction/discard mechanism (20, 21, 104) discards the sample from the sample position placed in the introduction/discard position and introduces a sample into the sample position (108), then the rotation control device rotates the disc (11, 101) so as to move the origin of the disc to the particular position, and then
the rotation control device rotates the disc (11, 101) at the predetermined speed, and the detector (12, 103) measures the plurality of samples on the disc.

14. The control method according to claim 12,
wherein the rotation control device (102, 106) that controls rotation of the disc rotates the disc (11; 101) so as to move the sample position (108) that holds a measured sample to a discard position (109) accessible to a sample discard mechanism (20, 21, 104),
the sample discard mechanism (20, 21, 104) discards the sample from the sample position placed in the discard position, then the rotation control device rotates the disc (11, 101) so as to move the sample position to the introduction position accessible to the sample introduction mechanism (20, 21, 104),

the sample introduction mechanism (20, 21, 104) introduces a sample into the sample position placed in the introduction position, then the rotation control device rotates the disc (11, 101) so as to move the origin of the disc to the particular position,
then the rotation control device rotates the disc (11, 101) at the predetermined speed, and the detector (12, 103) measures the plurality of samples on the disc.

**Patentansprüche**

1. Automatischer Analysator umfassend:

   eine Scheibe (11, 101) mit mehreren Probenorten (108), die Proben am Umfang aufnehmen können;
   eine Probeneinführvorrichtung (20, 21, 104) zum Einführen einer Probe in die Scheibe;
   einen Detektor (12, 103) zum Messen der Probe; und
   eine Drehsteuervorrichtung (102, 106) zum Steuern der Drehung der Scheibe,
   wobei die Drehsteuervorrichtung eingerichtet ist, die Drehung der Scheibe so zu steuern, dass ein Probenort (108) auf der Scheibe zu einem Einführort (109) bewegt wird, auf den die Probeneinführvorrichtung (20, 21, 104) zugreifen kann, und dann eine Probe durch die Probeneinführvorrichtung in den am Einführort angeordneten Probenort eingeführt wird,
   **dadurch gekennzeichnet, dass**
   der Detektor (12, 103) an einem Ort an der Scheibe angeordnet ist, um die auf der Scheibe angeordnete Probe zu messen, und
   die Drehsteuervorrichtung (102, 106) außerdem eingerichtet ist, die Drehung der Scheibe (11, 101) so zu steuern, dass ein Ursprung der Scheibe unter Rückkehr der Scheibe zu einem Ursprungszustand an einen bestimmten Ort bewegt wird, bevor dann mehrere Proben auf der Scheibe vom Detektor gemessen werden, während die Scheibe beginnend vom Ursprungszustand mit vorbestimmter Geschwindigkeit gedreht wird.

2. Automatischer Analysator nach Anspruch 1, wobei
   die Probeneinführvorrichtung einen Probeneinführ-/Entfernungsmechanismus (20, 21, 104) zum Einführen einer Probe in die Scheibe und zum Entfernen einer Probe von der Scheibe aufweist;
   wobei die Scheibe (11, 101) so gedreht wird, dass ein Probenort (108), der eine gemessene Probe enthält, an einen Einführ-/Entfernungsort (109) bewegt wird, auf den der Probeneinführ-/Entfernungsmechanismus (20, 21, 104) zugreifen kann, die Probe dann durch den Probeneinführ-/Entfernungsmechanismus vom am Einführ-/Entfernungsort angeordneten Probenort entfernt wird und eine Probe in den Probenort (108) eingeführt wird.

3. Automatischer Analysator nach Anspruch 1, wobei
   die Probeneinführvorrichtung (20, 21, 104) einen Probeneinführmechanismus und einen Probenentfernungsmechanismus zum Einführen einer Probe in die Scheibe und zum Entfernen einer Probe von der Scheibe aufweist;
   wobei die Scheibe (11, 101) so gedreht wird, dass ein Probenort (108), der eine gemessene Probe enthält, an einen Entfernungsort bewegt wird, auf den der Probenentfernungsmechanismus zugreifen kann, und die Probe dann durch den Probenentfernungsmechanismus von dem am Entfernungsort angeordneten Probenort entfernt wird, und die Scheibe so gedreht wird, dass der Probenort (108) zum Einführort bewegt wird, auf den der Probeneinführmechanismus (20, 21, 104) zugreifen kann, und dann eine Probe durch den Probeneinführmechanismus in den am Einführort angeordneten Probenort eingeführt wird.

4. Automatischer Analysator nach einem der Ansprüche 1 bis 3, wobei die Drehgeschwindigkeit und/oder die Drehrichtung der Scheibe (11, 101) veränderlich sind.

5. Automatischer Analysator nach einem der Ansprüche 1 bis 3, wobei die Drehrichtung so gesteuert wird, dass die Bewegungszeit minimiert wird, wenn der Ursprung der Scheibe (11, 101) an den bestimmten Ort bewegt wird.

6. Automatischer Analysator nach einem der Ansprüche 1 bis 3, wobei dann, wenn ein bestimmter Probenort (108) der Scheibe (11, 101) zum Einführort (109) bewegt wird, die Drehrichtung so gesteuert wird, dass die Bewegungszeit minimiert wird.

7. Automatischer Analysator nach einem der Ansprüche 2 bis 3, wobei dann, wenn der bestimmte Probenort (108) der Scheibe (11, 101) zum Entfernungsort (109) bewegt wird, die Drehrichtung so gesteuert wird, dass die Bewegungszeit minimiert wird.

**8.** Automatischer Analysator nach einem der Ansprüche 1 bis 3, wobei die Probe eine vorbehandelte Probe ist.

**9.** Automatischer Analysator nach einem der Ansprüche 1 bis 3, wobei die Probe eine Reaktionslösung ist, die bei einer geeigneten Temperatur eine Nukleinsäure amplifizieren kann.

**10.** Automatischer Analysator nach einem der Ansprüche 1 bis 3, wobei die Probeneinführvorrichtung (20, 21, 104) einen Reaktionsbehälter-Fördermechanismus (21) enthält, der einen eine Probe enthaltenden Reaktionsbehälter zur Scheibe (11, 101) fördern kann.

**11.** Automatischer Analysator nach einem der Ansprüche 2 bis 3, wobei der Probenentfernungsmechanismus oder der Probeneinführ-/Entfernungsmechanismus (20, 21, 104) einen Reaktionsbehälter-Fördermechanismus (21) enthält, der einen eine Probe enthaltenden Reaktionsbehälter von der Scheibe (11, 101) weg befördern kann.

**12.** Steuerverfahren zum Drehen einer Scheibe mit mehreren Probenorten, die am Umfang Proben aufnehmen können, wobei eine die Drehung der Scheibe steuernde Drehsteuervorrichtung (102, 106) die Scheibe (11, 101) so dreht, dass ein Probenort (108) auf der Scheibe an einen Einführort (109) bewegt wird, auf den ein Probeneinführmechanismus (20, 21, 104) zugreifen kann,
der Probeneinführmechanismus (20, 21, 104) eine Probe in den am Einführort angeordneten Probenort einführt, die Drehsteuervorrichtung die Scheibe dann so dreht, dass ein Ursprung der Scheibe unter Rückkehr der Scheibe zu einem Ursprungszustand an einen bestimmten Ort bewegt wird, und dann
die Drehsteuervorrichtung (102, 106) die Scheibe beginnend vom Ursprungszustand mit vorbestimmter Geschwindigkeit dreht und ein Detektor (12, 103) mehrere Proben auf der Scheibe misst.

**13.** Steuerverfahren nach Anspruch 12,
wobei die die Drehung der Scheibe steuernde Drehsteuervorrichtung (102, 106) die Scheibe (11, 101) so dreht, dass der Probenort (108), der eine gemessene Probe enthält, an einen Einführ-/Entfernungsort (109) bewegt wird, auf den ein Probeneinführ-/Entfernungsmechanismus (20, 21, 104) zugreifen kann,
der Probeneinführ-/Entfernungsmechanismus (20, 21, 104) die Probe vom am Einführ-/Entfernungsort angeordneten Probenort entfernt und eine Probe in den Probenort (108) einführt, die Drehsteuervorrichtung die Scheibe (11, 101) dann so dreht, dass der Ursprung der Scheibe an den bestimmten Ort bewegt wird, und dann
die Drehsteuervorrichtung die Scheibe (11, 101) mit vorbestimmter Geschwindigkeit dreht und der Detektor (12, 103) mehrere Proben auf der Scheibe misst.

**14.** Steuerverfahren nach Anspruch 12,
wobei die die Drehung der Scheibe steuernde Drehsteuervorrichtung (102, 106) die Scheibe (11, 101) so dreht, dass der Probenort (108), der eine gemessene Probe enthält, an einen Entfernungsort (109) bewegt wird, auf den ein Probenentfernungsmechanismus (20, 21, 104) zugreifen kann,
der Probenentfernungsmechanismus (20, 21, 104) die Probe von dem am Entfernungsort angeordneten Probenort entfernt, die Drehsteuervorrichtung die Scheibe (11, 101) dann so dreht, dass der Probenort zu einem Einführort bewegt wird, auf den ein Probeneinführmechanismus (20, 21, 104) zugreifen kann,
der Probeneinführmechanismus (20, 21, 104) eine Probe in den am Einführort angeordneten Probenort einführt und die Drehsteuervorrichtung die Scheibe (11, 101) dann so dreht, dass der Ursprung der Scheibe an den bestimmten Ort bewegt wird, und
die Drehsteuervorrichtung die Scheibe (11, 101) dann mit vorbestimmter Geschwindigkeit dreht und der Detektor (12, 103) die Proben auf der Scheibe misst.

**Revendications**

**1.** Analyseur automatique comprenant :

un disque (11, 101) ayant une pluralité de positions d'échantillons (108) qui peut contenir des échantillons sur une circonférence ;
un dispositif d'introduction d'échantillon (20, 21, 104) pour introduire un échantillon dans le disque ;
un détecteur (12, 103) pour mesurer l'échantillon ; et
un dispositif de commande de rotation (102, 106) pour commander la rotation du disque,
dans lequel le dispositif de commande de rotation est conçu pour commander la rotation du disque de manière à déplacer une position d'échantillon (108) sur le disque vers une position d'introduction (109) accessible au dispositif d'introduction d'échantillon (20, 21, 104), et un échantillon est ensuite introduit dans la position d'échantillon placée dans la position d'introduction par le dispositif d'introduction d'échantillon,
**caractérisé en ce que**
le détecteur (12, 103) est placé à une position autour du disque pour mesurer l'échantillon placé sur le disque, et le dispositif de commande de rotation (102, 106) est en outre conçu pour commander la rotation du disque (11, 101) de manière à déplacer une origine du disque vers une position particulière, ramenant ainsi le disque à un état d'origine, avant qu'une pluralité d'échantillons sur le disque soient mesurés par le détecteur tandis que le disque est mis en rotation à une vitesse prédéterminée à partir de l'état d'origine.

2. Analyseur automatique selon la revendication 1, dans lequel :

le dispositif d'introduction d'échantillon a un mécanisme d'introduction/de rejet d'échantillon (20, 21, 104) pour introduire un échantillon dans le disque et rejeter un échantillon du disque ;
dans lequel le disque (11, 101) est mis en rotation de manière à déplacer une position d'échantillon (108) qui contient un échantillon mesuré vers une position d'introduction/de rejet (109) accessible au mécanisme d'introduction/de rejet d'échantillon (20, 21, 104), puis l'échantillon est rejeté de la position d'échantillon placée dans la position d'introduction/de rejet par le mécanisme d'introduction/de rejet d'échantillon, et un échantillon est introduit dans la position d'échantillon (108).

3. Analyseur automatique selon la revendication 1, dans lequel :

le dispositif d'introduction d'échantillon (20, 21, 104) a un mécanisme d'introduction d'échantillon et un mécanisme de rejet d'échantillon pour introduire un échantillon dans le disque et rejeter un échantillon du disque ;
dans lequel le disque (111, 101) est mis en rotation de manière à déplacer une position d'échantillon (108) qui contient un échantillon mesuré vers une position de rejet accessible au mécanisme de rejet d'échantillon, puis l'échantillon est rejeté de la position d'échantillon placée dans la position de rejet par le mécanisme de rejet d'échantillon, et
le disque est mis en rotation de manière à déplacer la position d'échantillon (108) vers la position d'introduction accessible au mécanisme d'introduction d'échantillon (20, 21, 104), puis un échantillon est introduit dans la position d'échantillon placée dans la position d'introduction par le mécanisme d'introduction d'échantillon.

4. Analyseur automatique selon l'une quelconque des revendications 1 à 3, dans lequel une vitesse de rotation et/ou un sens de rotation du disque (11, 101) sont variables.

5. Analyseur automatique selon l'une quelconque des revendications 1 à 3, dans lequel le sens de rotation est commandé de manière à minimiser un temps de parcours lorsque l'origine du disque (11, 101) est déplacée vers la position particulière.

6. Analyseur automatique selon l'une quelconque des revendications 1 à 3, dans lequel lorsqu'une position d'échantillon particulière (108) du disque (11, 101) est déplacée vers la position d'introduction (109), le sens de rotation est commandé pour minimiser le temps de parcours.

7. Analyseur automatique selon l'une quelconque des revendications 2 à 3, dans lequel lorsque la position d'échantillon particulière (108) du disque (11, 101) est déplacée vers la position de rejet (109), le sens de rotation est commandé pour minimiser le temps de parcours.

8. Analyseur automatique selon l'une quelconque des revendications 1 à 3, dans lequel l'échantillon est un échantillon prétraité.

9. Analyseur automatique selon l'une quelconque des revendications 1 à 3, dans lequel l'échantillon est une solution réactionnelle qui peut amplifier un acide nucléique cible à une température souhaitée.

10. Analyseur automatique selon l'une quelconque des revendications 1 à 3, dans lequel le dispositif d'introduction d'échantillon (20, 21, 104) comprend un mécanisme de transport de récipient de réaction (21) qui transporte un récipient de réaction contenant un échantillon vers le disque (11, 101).

11. Analyseur automatique selon l'une quelconque des revendications 2 à 3, dans lequel le mécanisme de rejet d'échantillon ou le mécanisme d'introduction/de rejet d'échantillon (20, 21, 104) comprend un mécanisme de transport de récipient de réaction (21) qui transporte un récipient de réaction contenant un échantillon du disque (11, 101).

12. Procédé de commande pour la rotation d'un disque ayant une pluralité de positions d'échantillons qui peut contenir des échantillons sur une circonférence,
dans lequel un dispositif de commande de rotation (102, 106) qui commande la rotation du disque fait tourner le disque (11, 101) de manière à déplacer une position d'échantillon (108) sur le disque vers une position d'introduction (109) accessible à un mécanisme d'introduction d'échantillon (20, 21, 104),
le mécanisme d'introduction d'échantillon (20, 21, 104) introduit un échantillon dans la position d'échantillon placée dans la position d'introduction, puis le dispositif de commande de rotation fait tourner le disque de manière à déplacer une origine du disque vers une position particulière, ramenant ainsi le disque à un état d'origine, puis
le dispositif de commande de rotation (102, 106) fait tourner le disque à une vitesse prédéterminée à partir de l'état d'origine, et un détecteur (12, 103) mesure une pluralité d'échantillons sur le disque.

13. Procédé de commande selon la revendication 12,
dans lequel le dispositif de commande de rotation (102, 106) qui commande la rotation du disque fait tourner le disque (11, 101) de manière à déplacer la position d'échantillon (108) qui contient un échantillon mesuré vers une position d'introduction/de rejet (109) accessible à un mécanisme d'introduction/de rejet d'échantillon (20, 21, 104),
le mécanisme d'introduction/de rejet d'échantillon (20, 21, 104) rejette l'échantillon de la position d'échantillon placée dans la position d'introduction/de rejet et introduit un échantillon dans la position d'échantillon (108), puis le dispositif de commande de rotation fait tourner le disque (11, 101) de manière à déplacer l'origine du disque vers la position particulière, puis
le dispositif de commande de rotation fait tourner le disque (11, 101) à la vitesse prédéterminée, et le détecteur (12, 103) mesure la pluralité d'échantillons sur le disque.

14. Procédé de commande selon la revendication 12,
dans lequel le dispositif de commande de rotation (102, 106) qui commande la rotation du disque fait tourner le disque (11 ; 101) de manière à déplacer la position d'échantillon (108) qui contient un échantillon mesuré vers une position de rejet (109) accessible à un mécanisme de rejet d'échantillon (20, 21, 104),
le mécanisme de rejet d'échantillon (20, 21, 104) rejette l'échantillon de la position d'échantillon placée dans la position de rejet, puis le dispositif de commande de rotation fait tourner le disque (11, 101) de manière à déplacer la position d'échantillon vers la position d'introduction accessible au mécanisme d'introduction d'échantillon (20, 21, 104),
le mécanisme d'introduction d'échantillon (20, 21, 104) introduit un échantillon dans la position d'échantillon placée dans la position d'introduction, puis le dispositif de commande de rotation fait tourner le disque (11, 101) de manière à déplacer l'origine du disque vers la position particulière,
ensuite le dispositif de commande de rotation fait tourner le disque (11, 101) à la vitesse prédéterminée, et le détecteur (12, 103) mesure la pluralité d'échantillons sur le disque.

# Figure 1

# Figure 2

## (A)

## (B)

# Figure 3

# Figure 4

(A)

(B)

# Figure 5

|  | Disc | Detector | Introduction/Discard mechanism |
|---|---|---|---|

Start measurement operation

Step 1 — Adjustment rotation

Step 2 — Discard sample

Step 3 — Introduce sample

Step 4 — Rotation returning to origin

Step 5 — Measurement rotation / Collect data

Step 6 — Repeat Steps 1 to 5

Finish measurement operation

See Figure 6

EP 2 392 929 B1

# Figure 6

```
                        ┌─────────────────────┐
                        │  Start measurement  │◄──────────────┐
                        │     operation       │               │
                        └─────────────────────┘               │
                                   │                           │
                                   ▼                           │
         Yes           ╱─────────────────────╲      No         │
    ┌──────────────────   Discard/Introduce   ────────────┐    │
    │                  ╲       sample        ╱             │    │
    ▼                   ╲───────────────────╱              ▼    │
┌─────────────────────┐                          ┌──────────────────┐
│ Adjustment rotation │                          │    Stop disc     │
└─────────────────────┘                          └──────────────────┘
           │                                               │
           ▼                                               │
  Yes  ╱─────────────╲                                     │
 ┌──────  Discard sample  ───╲                             │
 │     ╲─────────────╱                                     │
 ▼            │ No                                         │
┌──────────────────────────┐ │                            │
│ Sample discard operation │ │                            │
└──────────────────────────┘ │                            │
           │                  │                            │
           ▼                  │                            │
  ╱─────────────────╲  Yes    │                            │
──   Introduce sample  ───┐   │                            │
  ╲─────────────────╱     │   │                            │
           │ No           ▼   ▼                            │
           │    ┌──────────────────────────────┐          │
           │    │ Sample introduction operation │          │
           │    └──────────────────────────────┘          │
           │                  │                            │
           ▼                  ▼                            ▼
┌──────────────────────────────────────────────────────────────────┐
│               Rotation returning to origin                        │
└──────────────────────────────────────────────────────────────────┘
                             │
                             ▼
              ┌──────────────────────────────┐
              │     Measurement rotation     │
              └──────────────────────────────┘
```

# Figure 7

EP 2 392 929 B1

| | Shield unit | Disc | Detector | Introduction/Discard mechanism | Time |
|---|---|---|---|---|---|
| | | | Start measurement operation | | |
| Step 1 | Open shutter | Adjustment rotation | | | 2.6 seconds |
| Step 2 | | | | Introduce and/or discard sample | 5.2 seconds |
| Step 3 | Close shutter | Rotation returning to origin | | | 2.6 seconds |
| Step 4 | | Measurement rotation | Collect data | | 19.6 seconds |
| Step 5 | | | Repeat Steps 1 to 4 | | 30 seconds |
| | | | Finish measurement operation | | |

**EP 2 392 929 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5580524 A

- JP 2003021645 A